# EUROPEAN PATENT APPLICATION

(11) **EP 0 663 608 A1**
(43) Date of publication of application: **19.07.1995**
(21) Application number: 95100178.3
(22) Date of filing: 09.01.1995
(51) Int. Cl.: G03B 23/00

(54) **Remote control unit for photographic slide projector**

(30) Priority: 13.01.1994 US 181264
(71) Applicant: EASTMAN KODAK COMPANY, Rochester, New York 14650 (US)
(72) Inventor: Cope, Russell James, Jr., c/o Eastman Kodak Comp., Rochester, New York 14650-2201 (US)
(74) Representative: Blickle, K. Werner, Dipl.-Ing.

(57) **Abstract**

A remote control is described for a photographic slide projector. The remote control includes a housing defining a keyboard upon which are disposed a plurality of switches for controlling the operation of the projector. A light-emitting element is also provided which is attached to the unit housing and to the power source of the unit in such a manner that the light-emitting element becomes illuminated once power is applied to the remote control unit, allowing the remote control to be easily located in a darkened environment.

## Description

### FIELD OF THE INVENTION

This invention is related to the field of photographic slide projectors and in particular to an improved remote control unit.

### BACKGROUND OF THE INVENTION

Slide photographic projectors are typically known in the field and are generally described by a main portion defined by a housing, an illumination source and optical means which are disposed within the housing for projecting images of individual slide elements advanced between the illumination source and the optical means, and a remote control portion for remotely controlling the operation of the main portion. The remote control portion provides convenience for a user who can more easily use the projector from a better vantage point to point out features of projected slides.

There are conventionally known projectors in which the remote control portion is tethered to the main portion by means of a long multi-conductive cord. An example is described in U.S. Patent No. 3,078,763. Included as a part of the remote control is a light bulb which can be activated by a switch located on the remote control's keyboard to illuminate the bulb. This provides the operator with a reading and pointing light so that he or she may be able to read commentary when describing presented slides. The operator, however, is required to manually throw the switch in order to use the light bulb.

### PROBLEM TO BE SOLVED

The problem in using the remote control according to the '763 patent is that the user must initially locate the remote control after activating the projector and then locate and depress the switch controlling the light on the remote control. Because the location in which slides are shown is usually darkened, it can be quite inconvenient for the operator to initially locate the remote control and then find the correct switch in order to illuminate the unit.

In addition, the ability to provide a compactly designed remote control unit is limited due to the placement of additional switches such as those required in order to operate the light bulb.

There is a need then to provide a remote control which can be easily found in a darkened environment and that does not require that the user manually activate the lighting apparatus.

### SUMMARY OF THE INVENTION

The present invention is directed to overcoming one or more of the problems set forth above. Briefly summarized, and according to one aspect of the present invention, there is provided a photographic slide projector comprising a remote control portion having a light-emitting element and a main portion having activation means for powering the main portion and the remote control portion characterized in that the activation means and the remote control portion include cooperating means for automatically illuminating the light-emitting element when the remote control portion is powered.

In a preferable embodiment, an interconnecting cable provides power to the remote control portion, including the light-emitting element when the main portion is powered. The activation means also preferably includes means for limiting the amount of power from the cable to be transmitted to the light-emitting element.

### ADVANTAGEOUS EFFECTS OF THE INVENTION

By providing a projector having the described remote control according to the present invention a user can immediately locate the remote control in a darkened room once the projector is powered without resort to having to turn on the house lights.

A further advantageous feature of the present invention is that a remote control can be made without additional switching means, thereby reducing the size and cost to manufacture the remote control while also increasing the ease of use and convenience to a user.

These and other advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a side elevational view of a typical slide photographic projector having a remote control portion in accordance with a preferred embodiment of the present invention.

FIG. 2 is a top view of the remote control portion depicted in FIG. 1.

FIG. 3 is a cross sectional view taken through line 3-3 of FIG. 2 of the remote control portion shown in FIGS. 1-2.

FIG. 4 is an electrical schematic diagram of the remote control portion shown in FIGS. 1-3, showing in particular the connectivity of the light-emitting element according to the preferred embodiment.

### DESCRIPTION OF THE PREFERRED EMBODIMENTS

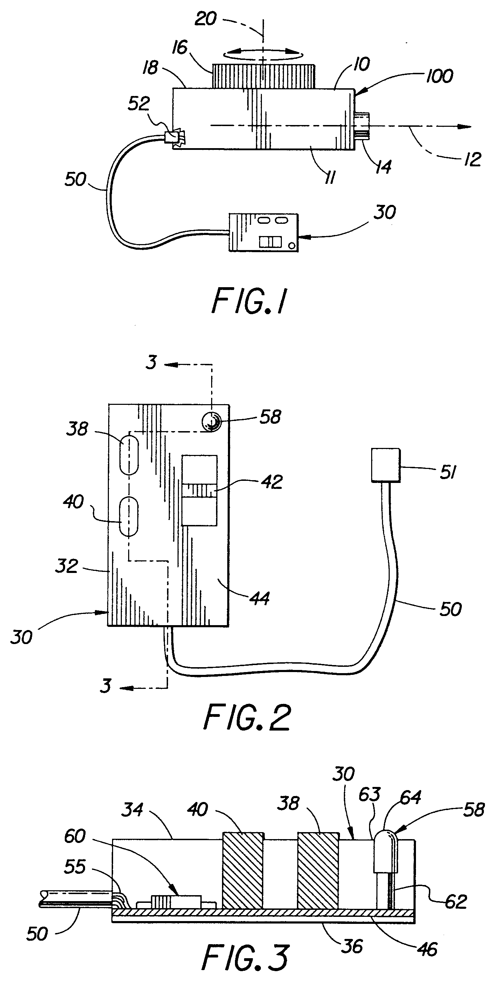

A preferred embodiment of the present invention will now be described with the benefit of FIGS. 1-4.

Referring specifically to FIG. 1, there is provided a photographic slide projector 100, having a main portion 10 defined by a housing 11 having an optical axis 12 in alignment with at least one optical element 14 and an illumination source (not shown) disposed within the housing 11. A rotatable slide cartridge or magazine 16 capable of carrying a plurality of slides (not shown) is releasably mounted to a supporting surface 18 of housing 11. Cartridge 16 rotates, per arrow 15, in a step-wise fashion about a central rotational axis 20 to advance the slides between the illumination source and the optical element(s) 14 where the images of the slides are displayed on a projection screen (not shown) or the like. Details as to the specific drive mechanisms of projector 100 for rotating a cartridge 16 and for adjustment of the optical elements 14 are considered to be conventionally known and are not considered part of the present invention.

The projector 100 also includes a remote control portion 30 having a long multi-conductive cord or cable 50 which is connected at one end to a connector port 52 found at one corner of housing 11.

Referring to FIGS. 2 and 3, remote control portion 30 is herein described in greater detail. A two part housing 32 is provided, preferably made from a lightweight plastic material such as polycarbonate and defined by a top cover section 34 and a flat bottom section 36. A series of switches 38, 40, 42 are disposed on a keyboard 44 to control various operational features of the processor 100.

In this particular embodiment, switch 38 controls the forward advancement of slides by directing a step actuation of cartridge 16 about axis 20 per arrow 15. Similarly, switch 40 is provided to control a reverse incrementation by directing a step actuation of cartridge 16 about axis 20 in the opposite direction. Sliding switch 42 is additionally provided to control the focus of the optical elements 14 based on parameters such as the distance of projector 100 from a projection screen, the format of the slide, etc. See Fig. 1.

Referring to Figs. 1 and 3, cable 50 interconnects remote portion 30 to main portion 10 by way of a pinned connector 51 releasably connected to a mating connector port 52 extending from one corner of the projector housing 11. Cord 50 is connected at its other end to the housing 32 of remote control portion 30, as shown in FIG. 3.

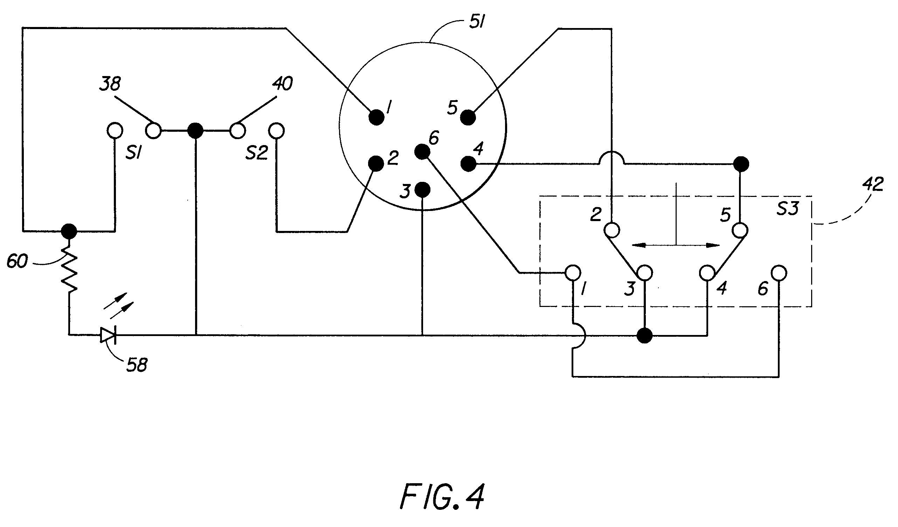

Cord 50 is defined by a bundle of individual conductive cables 55 which are sheathed by an outer plastic coating. A printed circuit board 46 is provided within housing 32 to which each of the individual conductive cables 55 are soldered, or otherwise attached. Each of the control switches 38, 40, and 42 are also individually attached to the circuit board 46 according to Figs. 3 and 4. Each switch 38, 40, 42 extends through apertures (not shown) that are provided in top cover 34 to allow physical contact by a user.

A light-emitting element, in this particular embodiment, a light emitting diode (LED)58 and a resistor 60 are provided, each being connected to the printed circuit board 46 and disposed within housing 32 of remote control portion 30. LED 58, consisting of a connecting portion 62 and a light-emitting portion 64 is sized so that the light-emitting portion extends through an opening 63 provided in top cover section 34, as depicted in FIG. 3.

Connector port 52, Fig. 1, provides a mating section for pinned connector 51 and furnishes electrical power to the remote control portion 30. Each of the corresponding drive and focusing mechanisms (not shown) to be controlled by the remote control portion 30 are also electrically connected to port 52 so as to interface with corresponding switches 38, 40, 42.

The specific operation of the remote control portion 30 and in particular the workings of the light-emitting element 58 will now be described with particular reference to FIGS. 3 and 4.

Referring to the schematic of FIG. 4, connector 51 is defined by six pins, each of which extend to switches 38, 40 and 42 as shown. As seen from the schematic, each switch 38, 40, 42 can be separately activated to draw power according to this circuit arrangement, because power is always present once the main portion 10 is energized. In this embodiment, approximately 25.5 Vdc is always present to activate remote control portion 30 once power has been applied to main portion 10; that is, after cord 50 has been plugged into connector port 52 and main portion 10 has been energized, such as from a wall outlet (not shown). The powering of remote control portion 30 automatically causes the illumination of LED 58 which by its connection to circuit board 46 simply draws from the available power supplied. No additional switching or actuation means are required as LED 58 cooperates with power transmitting cord 50 and main portion 10 to provide illumination upon powering of main portion 10 and connection thereto by cord 50.

In order to limit the amount of current transmitted to the LED 58, resistor 60 is placed in series with the LED. The value of resistor 60 is such that it meets the current ratings of the LED 58; that is, it is selected for use by the requirements of the LED.

It should be readily apparent that the concept of the present invention is not limited to corded type remote control units as described by the preceding embodiment. For example, the present invention could also be included within other remote control units which use radio frequencies or infrared electronics to remotely operate projectors or other devices, such as televisions or stereo equipment, without requiring a tethered cord.

It is accordingly intended that the claims shall cover all such modifications and applications as do not depart from the true spirit and scope of the invention.

### Parts List for FIGS. 1-4

- 10: main portion
- 11: housing
- 12: optical axis
- 14: optical element
- 15: arrow
- 16: cartridge
- 18: supporting surface of housing 10
- 20: rotational axis
- 30: remote control portion
- 32: housing
- 34: top cover section
- 36: bottom section
- 38: switch
- 40: switch
- 42: switch
- 44: keyboard
- 46: printed circuit board
- 50: multi-conductive cord
- 51: connector
- 52: connector port
- 55: individual cables
- 58: light emitting diode
- 60: resistor
- 62: connective portion
- 63: opening
- 64: light-emitting portion

## Claims

1. A photographic slide projector comprising a remote control portion having a light-emitting element and a main portion having activation means for powering said remote control portion and said main portion, is characterized in that:
said activation means and said remote control portion include cooperating means for automatically illuminating said light-emitting element when said remote control portion is powered.

2. A projector as recited in claim 1 wherein said activation means includes a power-transmitting cable interconnecting said main portion and said remote control portion for powering said remote control portion, including said light-emitting element, when said main portion is powered.

3. A projector as recited in claim 2, wherein said activation means includes means for limiting the amount of power supplied to said light-emitting element from said cable.
